# EUROPEAN PATENT APPLICATION

(11) **EP 4 145 605 A1**
(43) Date of publication of application: **08.03.2023**
(21) Application number: 22194340.0
(22) Date of filing: 07.09.2022
(51) Int. Cl.: H01M 50/204, H01M 50/289, H01M 50/291, H01M 50/209

(54) **RECHARGEABLE BATTERY MODULE**

(30) Priority: 07.09.2021 KR 20210119184
(71) Applicant: Samsung SDI Co., Ltd., Yongin-si, Gyeonggi-do 17084 (KR)
(72) Inventor: LIM, Dooyong, 17084 Yongin-si (KR); PARK, Gunyeob, 17084 Yongin-si (KR); PARK, Seongjoon, 17084 Yongin-si (KR)
(74) Representative: Marks & Clerk LLP

(57) **Abstract**

A rechargeable battery module according to the present disclosure includes a plurality of unit cells that are stacked in a first direction and electrically connected with each other; an end cell cover that is disposed adjacent to the outermost unit cells in the first direction among the plurality of unit cells, and includes at least one adhesive accommodation buffer formed adjacent to an edge of the end cell cover; an end plate that is disposed at an outer side of the end cell cover to support the plurality of unit cells by pressing them in the first direction; and a side plate that extends in the first direction and is disposed to support a side surface of the plurality of unit cells.

## Description

### BACKGROUND

### 1. Field

The present disclosure relates to a rechargeable battery module.

### 2. Description of the Related Art

Unlike a primary battery, a rechargeable battery is a battery that repeatedly performs charging and discharging. A small-capacity rechargeable battery is used for portable small electronic devices such as portable phones, tablet computers, and laptop computers, and a large-capacity rechargeable battery can be used as a power source for driving motors in hybrid vehicles and electric vehicles.

A rechargeable battery may be formed of a unit cell as shown in the example used for a small electronic device, or may be formed in a module state in which a plurality of unit cells are electrically connected as shown in the example used for driving a motor and a pack state in which a plurality of these modules are connected again.

For example, the rechargeable battery module may be configured by stacking and arranging a plurality of unit cells in one direction. An end plate is disposed at both ends according to an arrangement direction of the rechargeable battery module, and a side plate is disposed on both sides to fix the plurality of arranged unit cells.

In this case, it is necessary for the end plate and the side plate to be designed to cooperate with the fastening structures that form the rechargeable battery module such that a plurality of unit cells can be firmly fixed with each other.

### SUMMARY

One aspect of the present disclosure is to provide a rechargeable battery module designed to enable firm attachment of a side plate to a side of a stacked plurality of unit cells.

A rechargeable battery module according to an embodiment includes a plurality of unit cells that are stacked in a first direction and electrically connected with each other; an end cell cover that is disposed adjacent to the outermost unit cells in the first direction among the plurality of unit cells, and includes at least one adhesive accommodation buffer formed adjacent to an edge of the end cell cover; an end plate that is disposed at an outer side of the end cell cover to support the plurality of unit cells by pressing them in the first direction; and a side plate that extends in the first direction and is disposed to support a side surface of the plurality of unit cells.

The adhesive accommodation buffer may include an accommodation groove that is open outward in a second direction that is perpendicular to the plane of the side plate from the edge of the end cell cover.

The accommodation groove of the adhesive accommodation buffer may extend to have a depth in the second direction.

The accommodation groove of the adhesive accommodation buffer may be formed by being divided into a plurality of accommodation grooves.

An inlet end of the accommodation groove of the adhesive accommodation buffer may be disposed to align with a narrow side of the outermost unit cell.

The accommodation groove of the adhesive accommodation buffer may be closed by the side plate.

The end cell cover may include a first side facing the outermost unit cell and a second side facing the end plate, and the adhesive accommodation buffer may be formed by protruding on the second side of the end cell cover.

The adhesive accommodation buffer may protrude higher toward the edge from the second side of the end cell cover.

The end cell cover may be formed to have a rectangular shape, and the adhesive accommodation buffer may be formed adjacent to four corners of the end cell cover, respectively.

A rechargeable battery module according to another embodiment includes: a plurality of unit cells that are stacked in a first direction and electrically connected with each other; an end plate that is disposed to support a plurality of unit cells adjacent to an outermost unit cell in a first direction of the plurality of unit cells and includes at least one adhesive accommodation buffer formed adjacent to an edge; and a side plate that extends in the first direction and disposed to support a side surface of the plurality of unit cells.

The adhesive accommodation buffer may include an accommodation groove that is opened outward in a second direction that is perpendicular to a plane of the side plate from the edge of the end plate.

The accommodation groove of the adhesive accommodation buffer may have a depth by extending in the second direction.

The accommodation groove of the adhesive accommodation buffer may be formed by being divided into a plurality of accommodation grooves.

An inlet end of the accommodation groove of the adhesive accommodation buffer may be disposed to align with a narrow side of the outermost unit cell.

The accommodation groove of the adhesive accommodation buffer may be closed by the side plate.

At least some of the above and other features of the invention are set out in the claims.

In the rechargeable battery module according to the embodiment, the adhesive accommodation buffer is provided at the edge of the end cell cover or end plate to absorb adhesive overflow when adhesive is applied to the side plate and then pressed, and thus it is always possible to achieve more than the target adhesive application amount.

Accordingly, the side plate is firmly attached to the side surfaces of the plurality of stacked unit cells, and thus a stable fastening structure can be achieved. In addition, the performance of the entire module can be increased by sufficiently applying the adhesive to the outer unit cell, which is one of the weak points in terms of the rigidity of the rechargeable battery module.

### BRIEF DESCRIPTION OF THE DRAWINGS

FIG. 1 is partial exploded perspective view of a rechargeable battery module according to an embodiment.
FIG. 2 is a perspective view of the rechargeable battery according to the embodiment.
FIG. 3 is an exploded perspective view of a part of the rechargeable battery according to the embodiment.
FIG. 4 is a perspective view of an end cell cover of the rechargeable battery module according to the embodiment.
FIG. 5A to FIG. 5D are process diagrams showing some processes of manufacturing a rechargeable battery module according to an embodiment.
FIG. 6 is an exploded perspective view of a part of a rechargeable battery according to another embodiment.

### DETAILED DESCRIPTION

Hereinafter, an embodiment of the present invention will be described in detail and thus a person of an ordinary skill in the technical field to which the present invention belongs can easily implement it with reference to the accompanying drawing. The drawings and description are to be regarded as illustrative in nature and not restrictive. Like reference numerals designate like elements throughout the specification. In addition, in the accompanying drawings, some constituent elements are exaggerated, omitted, or schematically shown, and the size of each constituent element does not fully reflect the actual size.

The attached drawings are only for ease of understanding of the embodiment disclosed in the present specification, and the technical idea disclosed in this specification is not limited by the attached drawings, and it should be understood to include all changes and equivalents included in the technical scope of the present invention.

Terms including ordinal numbers such as first, second, and the like may be used to describe various configurations of elements, but the constituent elements are not limited by the terms. The terms are only used for the purpose of distinguishing one constituent element from another.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to mean positioned above or below the target element, and will not necessarily be understood to mean positioned "at an upper side" based on an opposite direction to gravity.

In the present application, terms such as "comprise" or "include" are intended to designate the existence of features, numbers, steps, operations, constituent elements, parts, or combinations thereof described in the specification, and it is to be understood that this does not preclude in advance the possibility of the presence or addition of one or more other features or numbers, steps, actions, constituent elements, parts or combinations thereof. Unless defined otherwise, all terms used herein, including technical or scientific terms, have the same meaning as commonly understood by a person of an ordinary skill in the art to which the present invention belongs.

Further, throughout the specification, the phrase "on a plane" means viewing a target portion from the top, and the phrase "on a cross-section" means viewing a cross-section formed by vertically cutting a target portion from the side.

In addition, throughout the specification, when "connected to" is used, this does not only mean that two or more constituent elements are directly connected, but also means that two or more constituent elements are indirectly connected, physically connected, and electrically connected through other constituent elements, or being referred to by different names depending on the position or function, while being integral.

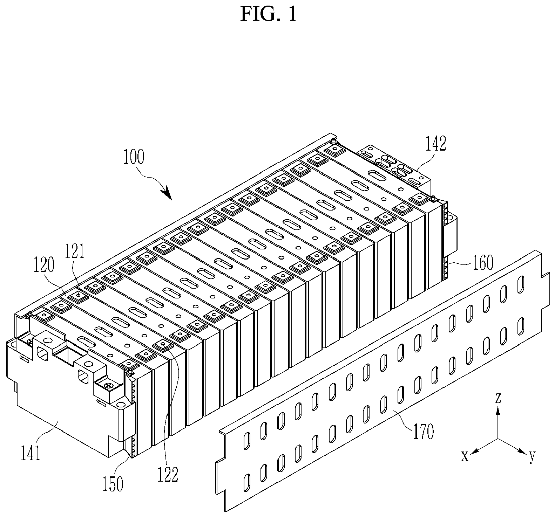

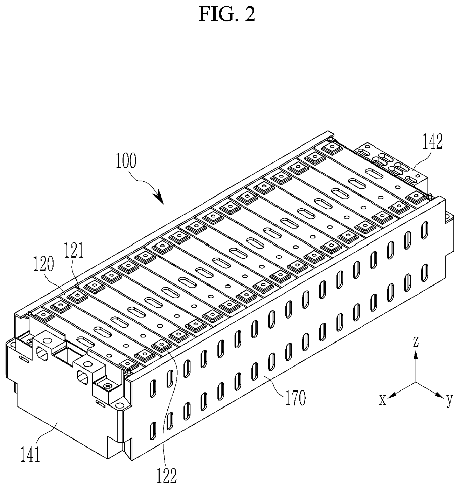

FIG. 1 is partial exploded perspective view of a rechargeable battery module according to an embodiment, and FIG. 2 is a perspective view of the rechargeable battery according to the embodiment.

Referring to FIG. 1 and FIG. 2, a rechargeable battery module 100 according to the present embodiment includes a plurality of unit cells 120, end plates 141 and 142 that are disposed at the outermost sides of the outermost unit cell 120 among the plurality of unit cells 120, and side plates 170 disposed to support side surfaces of the plurality of unit cells 120. End cell covers 150 and 160 may be interposed between the outermost unit cell 120 and the end plates 141 and 142. That is, the end cell covers 150 and 160 may be disposed adjacent to the outermost unit cell 120, and the end plates 141 and 142 may be disposed on the outer side of the end cell covers 150 and 160.

The plurality of unit cells 120 may be arranged and stacked in a first direction (x-axis direction in the drawing) and electrically and mechanically connected to each other. Each of the plurality of unit cells 120 may be formed of a prismatic rechargeable battery, and may be electrically connected through a bus bar (not shown).

For example, the unit cell 120 may include an electrode assembly and a case for embedding the same, a cap plate coupled to an opening of the case, and a first electrode terminal 121 and a second electrode terminal 122 installed on the cap plate. The first electrode terminal 121 may be a negative terminal, and the second electrode terminal 122 may be a positive terminal. However, the present invention is not limited to the structure of the unit cell.

The end cell covers 150 and 160 may be disposed adjacent to the outermost unit cell 120 in the first direction of the plurality of unit cells 120. Since the outermost unit cells 120 of the plurality of unit cells 120 are positioned at both ends in the first direction, a pair of end cell covers 150 and 160 may be disposed, one at each end. The end cell covers 150 and 160 are made of an insulating material and thus the outermost unit cell 120 and the end plates 141 and 142 can be electrically insulated.

The end plates 141 and 142 may be supported by pressing the plurality of unit cells 120 in the first direction while being in close contact with the outside of the end cell covers 150 and 160. That is, one pair of end plates 141 and 142 may be disposed on the outer side of a pair of end cell covers 150 and 160 disposed adjacent to both outermost unit cells 120. The disposed pair of end cell covers 150 and 160 may be fixed while pressing the plurality of unit cells 120 along the first direction by a separately provided fastening means.

The side plate 170 may have a plate shape extended in the first direction, and may be disposed to support the side plate of the plurality of unit cells 120. The side plate 170 may be partially protruded from both ends in the first direction to be connected to the end plates 141 and 142, and bent inward at upper and lower ends to be fixed to upper and lower edges of the plurality of unit cells 120. One pair of side plates 170 may be provided on both sides of the plurality of unit cells 120.

As a length of the module increases and the volume ratio to the height of the unit cells 120 increases, an adhesive such as a bond can be applied to the side plate 170 to reinforce the rigidity of the module. That is, the side plate 170 may be fixed by pressing it to the side surfaces of the plurality of unit cells 120 in a state in which an adhesive is applied.

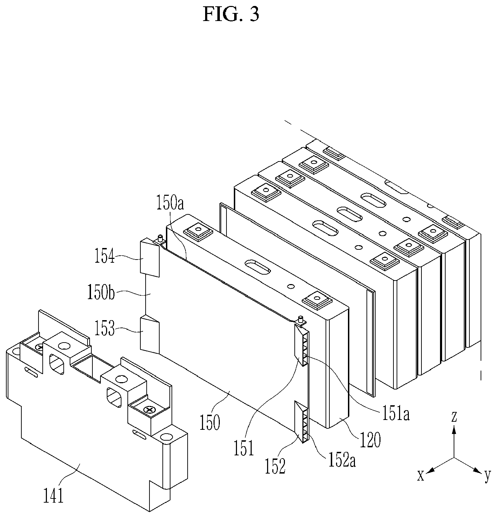

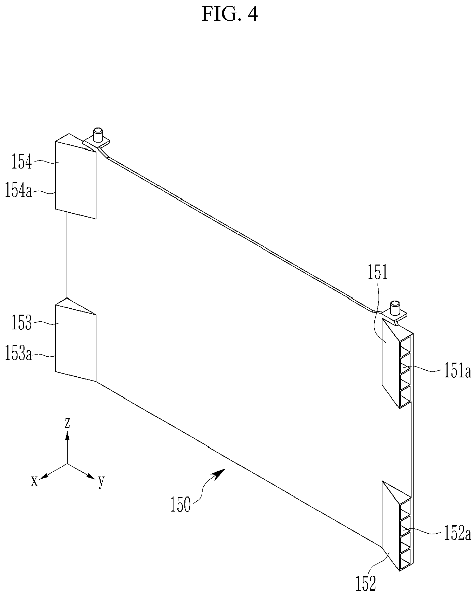

FIG. 3 is an exploded perspective view of a part of the rechargeable battery according to the embodiment, and FIG. 4 is a perspective view of an end cell cover of the rechargeable battery module according to the embodiment.

Referring to FIG. 3 and FIG. 4, the end cell cover 150 may be formed to have a planar rectangular shape approximately corresponding to a wide side shape of the unit cell 120. In addition, the end cell cover 150 may include a first surface 150a facing the outermost unit cell 120 and a second surface 150b facing the end plates 141 and 142.

In the present embodiment, the end cell cover 150 includes adhesive accommodation buffers 151, 152, 153, and 154 formed adjacent to the edge thereof. In this case, the adhesive accommodation buffers 151, 152, 153, and 154 may be formed adjacent to the four corners of the end cell cover 150, respectively. In addition, adhesive accommodation buffers 151, 152, 153, and 154 may be protruded and formed on the second surface 150b of the end cell cover 150. The adhesive accommodation buffers 151, 152, 153, and 154 may be protruded higher toward the edge from the second side 150b of the end cell cover 150. Accordingly, the height of the adhesive accommodation buffers 151, 152, 153, and 154 protruding on the second surface 150b may gradually decrease from the edge of the second surface 150b toward the inside.

The adhesive accommodation buffers 151, 152, 153, and 154 include accommodation grooves 151a, 152a, 153a, and 154a that are opened outwardly from the edge of the end cell cover 150. The accommodation grooves 151a, 152a, 153a, and 154a may be formed by being opened outward in the second direction (y-axis direction in the drawing) that is perpendicular to the side plate 170. These accommodation grooves 151a, 152a, 153a, and 154a may extend to have a depth in the second direction, and may be divided into a plurality of pieces.

In addition, inlet ends of the accommodation grooves 151a, 152a, 153a, and 154a can be disposed to align a narrow side of the outermost unit cell 120. The accommodation grooves 151a, 152a, 153a, and 154a of the adhesive accommodation buffers 151, 152, 153, and 154 may be configured to be closed by the side plate 170 (see FIG. 2).

When applying the adhesive to the side plate 170, even though it is applied to a portion close to the edge, the adhesive overflowed during compression can be accommodated in the accommodation grooves 151a, 152a, 153a, and 154a of the adhesive accommodation buffers 151, 152, 153, and 154. Therefore, it is possible to minimize the decrease in performance due to a non-adhesive (unfilled) region caused by parts and assembly tolerances of the side plate 170.

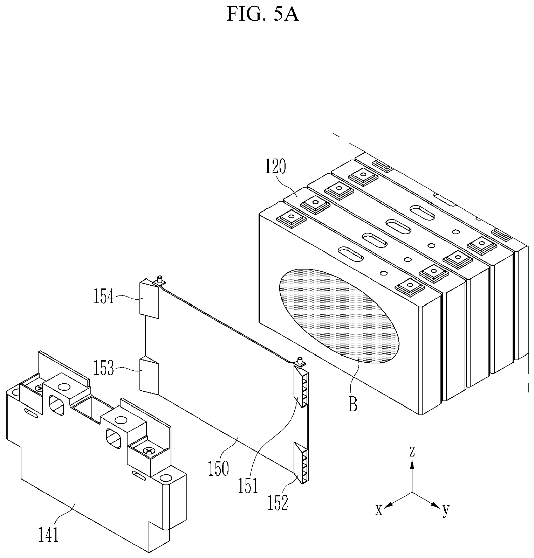

FIG. 5A to FIG. 5D are process diagrams showing some processes of manufacturing a rechargeable battery module according to an embodiment.

First, the plurality of unit cells 120 are stacked, and an adhesive B is applied to the outer wide side of the outermost unit cell 120 among the stacked unit cells 120 (see FIG. 5A).

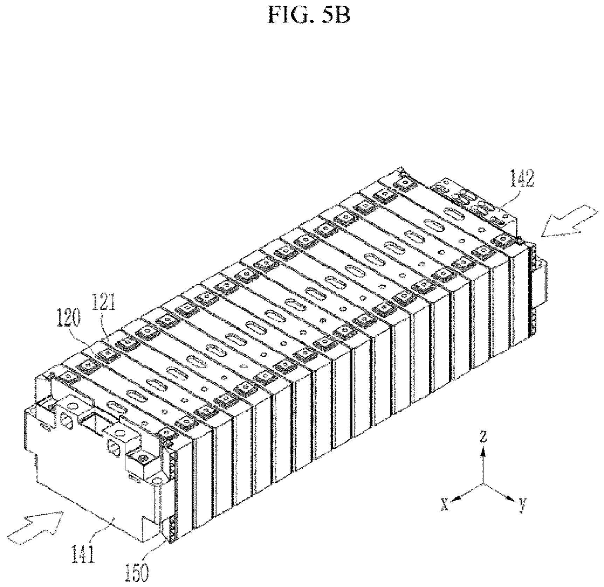

Next, from both ends of the stacked unit cells 120 in the first direction (x-axis direction in the drawing), the end cell covers 150 and 160 are pressed and attached to the outermost unit cell 120 coated with the adhesive B, and the end plates 141 and 142 are attached to the outside while being adjacent thereto (see FIG. 5B).

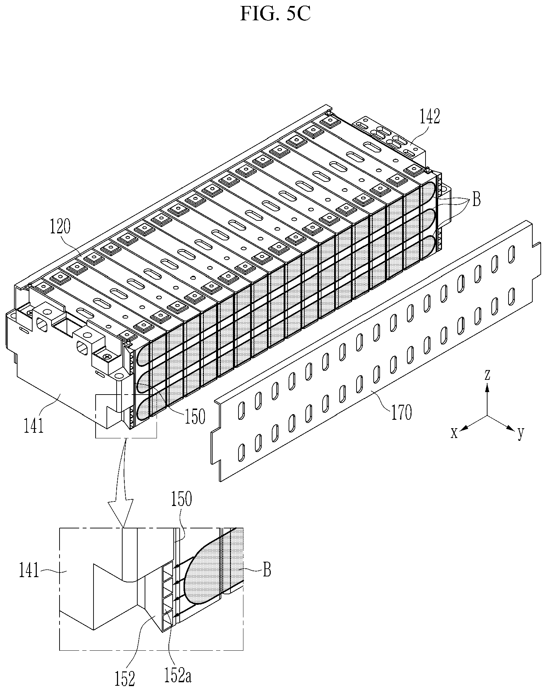

Next, the adhesive B is applied to the narrow side of the plurality of unit cells 120 (See FIG. 5C). In this case, the adhesive B may be widely applied to the narrow side of the plurality of unit cells 120, and may also be applied to the narrow side of the outermost unit cell 120 positioned at both ends in the first direction.

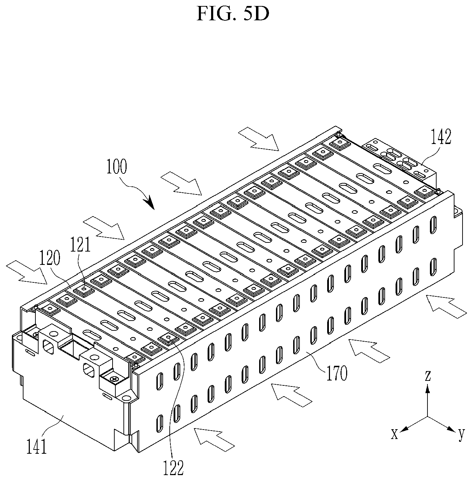

Next, the side plate 170 is attached while being close to the narrow side of the plurality of unit cells 120 (see FIG. 5D). The applied adhesive B may overflow toward the edge as the side plate 170 is in close contact. In this case, the adhesive accommodation buffers 151, 152, 153, and 154 formed on the end cell covers 150 and 160 may accommodate the overflowing adhesive B from the narrow sides of the outermost unit cell 120.

That is, since the accommodation grooves 151a, 152a, 153a, and 154a of the adhesive accommodation buffers 151, 152, 153, and 154 are disposed adjacent to the narrow side of the outermost unit cell 120, the overflowing adhesive B may be hardened while being accommodated in the accommodation grooves 151a, 152a, 153a, and 154a without spreading in other parts of the surrounding area. Therefore, adhesive application can be set with a margin without affecting the appearance and other process quality due to adhesive overflow.

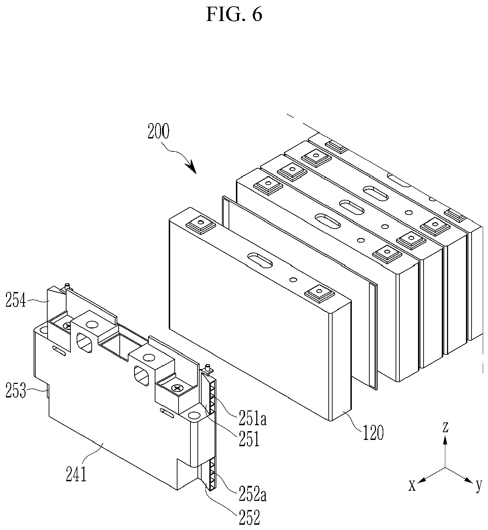

FIG. 6 is an exploded perspective view of a part of a rechargeable battery module according to another embodiment.

Referring to FIG. 6, the rechargeable battery module 200 includes a plurality of unit cells 120, an end plate 241 disposed at an outer side while being adjacent to the outermost unit cell 120 among the plurality of unit cells 120, and a side plate 170 (refer to FIG. 1) disposed to support a side surface of the plurality of unit cells 120.

In the present embodiment, one pair of end plates 241 may be provided on both sides of the plurality of unit cells 120 while being adjacent to the outermost unit cell 120 in a first direction (x-axis direction of the drawing) of the plurality of unit cells 120. The end plate 241 may support the plurality of unit cells 120 by pressing in the first direction.

The side plate 170 may have a plate shape extended in the first direction, and may be disposed to support the side plate of the plurality of unit cells 120. The side plate 170 may be fixed by closely adhering to the side surfaces of the plurality of unit cells 120 in a state in which adhesive such as a bond is applied.

In the present embodiment, the end plate 241 includes adhesive accommodation buffers 251, 252, 253 and 254 formed adjacent to the edge. In this case, the adhesive accommodation buffers 251, 252, 253 and 254 may be respectively formed adjacent to the four corners of the end plate 241. In addition, the adhesive accommodation buffers 251, 252, 253 and 254 may be protruded outward of the end plate 241 and protrude higher toward the edge. Therefore, the protruding height of the adhesive accommodation buffers 251, 252, 253 and 254 may gradually decrease from the edge to the inside.

The adhesive accommodation buffers 251, 252, 253 and 254 include accommodation grooves 251a and 252a that are opened outwardly from the edge of the end plate 241. For convenience of illustration, grooves of the adhesive accommodation buffers 253 and 254 are not shown in Fig, 6. The accommodation grooves 251a and 252a may be formed to open outward in a second direction (y-axis direction in the drawing) that is perpendicular to the plane of the side plate 170. The accommodating grooves 251a and 252a may extend to have a depth in the second direction, and may be formed by being divided into a plurality of accommodating grooves. In addition, the inlet ends of the accommodation grooves 251a and 252a may be disposed to align with the narrow side of the outermost unit cell 120.

In the above embodiments, the rechargeable battery module formed of a prismatic rechargeable battery has been described as an example, but when it is a battery module having a structure that is pressed and supported with an end cell cover, an end plate, and a side plate by stacking unit cells of various types and shapes. In this regard, it will be possible to implement by applying the characteristic structure of the present disclosure.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

### <Description of symbols>

100, 200: rechargeable battery module
120: unit cell
141, 142, 241: end plate
150, 160: end cell cover
151, 152, 153, 154, 251, 252, 253, 254: adhesive accommodation buffer
151a, 152a, 153a, 154a, 251a, 252a: accommodation groove
170: side plate
B: adhesive

## Claims

1. A rechargeable battery module comprising:
a plurality of unit cells that are stacked in a first direction and electrically connected with each other;
an end cell cover that is disposed adjacent to the outermost unit cells in the first direction among the plurality of unit cells, and comprises at least one adhesive accommodation buffer formed adjacent to an edge of the end cell cover;
an end plate that is disposed at an outer side of the end cell cover to support the plurality of unit cells by pressing them in the first direction; and
a side plate that extends in the first direction and is disposed to support a side surface of the plurality of unit cells.

2. The rechargeable battery module of claim 1, wherein
the adhesive accommodation buffer comprises an accommodation groove that is open outward in a second direction that is perpendicular to the plane of the side plate from the edge of the end cell cover.

3. The rechargeable battery module of claim 2, wherein
the accommodation groove of the adhesive accommodation buffer extends to have a depth in the second direction.

4. The rechargeable battery module of claim 2 or claim 3, wherein
the accommodation groove of the adhesive accommodation buffer is formed by being divided into a plurality of accommodation grooves.

5. The rechargeable battery module of any one of claims 2 to 4, wherein
an inlet end of the accommodation groove of the adhesive accommodation buffer is disposed to align with a narrow side of the outermost unit cell.

6. The rechargeable battery module of any one of claims 2 to 5, wherein
the accommodation groove of the adhesive accommodation buffer is closed by the side plate.

7. The rechargeable battery module of any one of claims 1 to 6, wherein
the end cell cover comprises a first side facing the outermost unit cell and a second side facing the end plate, and
the adhesive accommodation buffer is formed by protruding on the second side of the end cell cover.

8. The rechargeable battery module of claim 7, wherein
the adhesive accommodation buffer protrudes higher toward the edge from the second side of the end cell cover.

9. The rechargeable battery module of any one of claims 1 to 8, wherein
the end cell cover is formed to have a rectangular shape, and
the adhesive accommodation buffer is formed adjacent to four corners of the end cell cover, respectively.

10. A rechargeable battery module comprising:
a plurality of unit cells that are stacked in a first direction and electrically connected with each other;
an end plate that is disposed to support a plurality of unit cells adjacent to an outermost unit cell in a first direction of the plurality of unit cells and comprises at least one adhesive accommodation buffer formed adjacent to an edge; and
a side plate that extends in the first direction and disposed to support a side surface of the plurality of unit cells.

11. The rechargeable battery module of claim 10, wherein
the adhesive accommodation buffer comprises an accommodation groove that is open outward in a second direction that is perpendicular to a plane of the side plate from the edge of the end plate.

12. The rechargeable battery module of claim 11, wherein
the accommodation groove of the adhesive accommodation buffer has a depth by extending in the second direction.

13. The rechargeable battery module of claim 11 or claim 12, wherein
the accommodation groove of the adhesive accommodation buffer is formed by being divided into a plurality of accommodation grooves.

14. The rechargeable battery module of any one of claims 11 to 13, wherein
an inlet end of the accommodation groove of the adhesive accommodation buffer is disposed to align with a narrow side of the outermost unit cell.

15. The rechargeable battery module of any one of claims 11 to 14, wherein:
the accommodation groove of the adhesive accommodation buffer is closed by the side plate.
